(19) Europäisches Patentamt
European Patent Office
Office européen des brevets

(11) Numéro de publication: **0 057 145**
**B2**

(12) **NOUVEAU FASCICULE DE BREVET EUROPEEN**

(45) Date de publication du nouveau fascicule du brevet: **07.01.88**

(51) Int. Cl.⁴: **C 01 B 11/02**

(21) Numéro de dépôt: **82400122.6**

(22) Date de dépôt: **22.01.82**

(54) **Procédé de génération de dioxyde de chlore.**

(30) Priorité: **27.01.81 FR 8101462**

(43) Date de publication de la demande:
**04.08.82 Bulletin 82/31**

(45) Mention de la délivrance du brevet:
**13.06.84 Bulletin 84/24**

(45) Mention de la décision concernant l'opposition:
**07.01.88 Bulletin 88/1**

(84) Etats contractants désignés:
**AT BE DE FR GB IT NL SE**

(56) Documents cités:
**EP - A - 0 018 670**
**DE - B - 2 824 325**
**DE - C - 831 542**
**NL - A - 6 906 359**
**US - A - 2 484 402**
**US - A - 2 664 341**

**JOURNAL OF APPLIED CHEMISTRY OF THE USSR, volume 5, no. 2, février 1978 Plenum Publishing Corp. K.D. DOBRYSHIN "The use of hydrochloric acid as a reductant of chlorates in the production of chlorine dioxide", pages 415-417**
**CHEMICAL ABSTRACTS, volume 63, no. 9, 25 octobre 1965, colonne 11060a COLUMBUS OHIO (US) "The Manufacture and Properties of Chlorine Dioxide", E. KESTING, TAPPI vol. 36 No. 4, April 1953**

(73) Titulaire: **ATOCHEM, 4 & 8, Cours Michelet La Défense 10, F-92800 Puteaux (FR)**

(72) Inventeur: **Combroux, Jean, 52, route de Saint-Laurent Taluyers, F-69440 Mornant (FR)**

(74) Mandataire: **Rochet, Michel et al, ATOCHEM Département Propriété Industrielle, F-92091 Paris la Défense Cédex 42 (FR)**

**EP 0 057 145 B2**

**Description**

La présente invention concerne un procédé pour l'obtention de dioxyde de chlore.

Le dioxyde de chlore est très utilisé industriellement du fait de ses propriétés oxydantes très élevées. Ses principaux domaines d'application sont le blanchiment de la pâte à papier, des textiles, le traitement de l'eau pour lequel le dioxyde de chlore permet l'obtention d'eau potable ayant de bonnes propriétés organoleptiques....

Différents moyens ont été mis au point pour la génération de dioxyde de chlore. En général la formation de dioxyde de chlore met en jeu la réduction d'un chlorate de métal alcalin, habituellement le chlorate de sodium, en milieu acide. Les composés réducteurs les plus couramment employés sont le dioxyde de soufre, le peroxyde d'hydrogène, les chlorures de métaux alcalins.

Dans ce dernier cas la réaction de base utilisée dans ces procédés peut être représentée par l'équation chimique suivante:

$$2\,ClO_3^- + 2\,Cl^- + 4\,H^+ \rightarrow 2\,ClO_2 + Cl_2 + 2\,H_2O$$

Dans des procédés de ce type, l'acide introduit dans le milieu réactionnel est généralement l'acide sulfurique.

La réaction mise en jeu est représentée par l'équation suivante:

$$2\,NaClO_3 + 2\,NaCl + 2\,H_2SO_4 \rightarrow 2\,ClO_2 + Cl_2 + 2\,Na_2SO_4 + 2\,H_2O$$

Des procédés mettant en œuvre le système réactionnel ci-dessus sont décrits, par exemple, dans les brevets français 1 443 755, 2 003 223 ou encore par les brevets canadiens 993 158 ou 976 726.

Il est nécessaire selon ces procédés d'opérer en milieu très acide correspondant à des concentrations d'acide, exprimées en normalité, de 1 à 12 N.

Il y a donc formation d'un effluent acide constitué par un mélange d'acide sulfurique et de sulfate de sodium en solution aqueuse auquel il est très difficile de trouver une utilisation et qui est rejeté après avoir été neutralisé.

Cependant, il est possible de générer du dioxyde de chlore à partir d'un chlorate de métal alcalin, habituellement le chlorate de sodium, en introduisant dans le milieu réactionnel de l'acide chlorhydrique. Cet acide agit en fornissant à la fois le réducteur et la source d'acidité.

La réaction mise en jeu dans le cas où le chlorate de métal alcalin est le chlorate de sodium, est la suivante:

$$2\,NaClO_3 + 4\,HCl \rightarrow 2\,ClO_2 + Cl_2 + 2\,NaCl + 2\,H_2O$$

Lorsqu'une quantité d'acide chlorhydrique en excès par rapport à la stoechiométrie de la réaction ci-dessus est introduite soit localement soit globalement dans le milieu réactionnel une réaction parallèle se développe selon l'équation chimique ci-après:

$$NaClO_3 + 6\,HCl \rightarrow 3\,Cl_2 + NaCl + 3\,H_2O$$

Dans cette réaction, il n'y a pas formation de dioxyde de chlore mais seulement de chlore.

Des procédés mettant en œuvre l'acide chlorhydrique se comportant à la fois comme fournisseur de l'acide et de l'agent réducteur ont été reportés dans différents brevets. A titre d'exemple, de tels procédés, s'appuyant sur le système réactionnel indiqué ci-dessus, ont été décrits, en particulier, dans le brevet français 1 015 040, les brevets canadiens 1 049 950, 956 783, 956 784.

Les inconvénients apportés par ces procédés sont constitués par la mise en œuvre d'appareillages onéreux. C'est le cas en particulier du procédé décrit dans le brevet français 1 015 040 dont le système d'appareil pour la génération du dioxyde de chlore est constitué par six réacteurs placés en cascade et dont la nature du matériau doit être le titane, métal résistant à la corrosion du mélange réactionnel porté jusqu'à sa température d'ébullition. D'autre part le volume total des six réacteurs est important: pour une production de dioxyde de chlore de l'ordre de 1 tonne à l'heure, celui-ci est d'environ 45 m³.

Selon les brevets canadiens 1 049 950, 956 783 et 956 784, la génération du dioxyde de chlore peut être réalisée dans des appareils fonctionnant sous des pressions inférieures à la pression atmosphérique, et leur solidité doit être accrue en conséquence.

La présente invention a pour objet un procédé de génération de dioxyde de chlore à partir d'un chlorate alcalin en solution aqueuse et d'acide chlorhydrique évitant les inconvénients des procédés de l'art antérieur dont le principal est le prix élevé des réacteurs employés. Celui-ci peut être mis en œuvre soit à partir d'acide chlorhydrique en solution aqueuse concentrée tel qu'il existe industriellement ou à partir d'acide chlorhydrique gazeux. La réaction est réalisée sous pression atmosphérique.

Le chlorate de métal alcalin utilisé peut être à titre d'exemple non limitatif le chlorate de sodium, le chlorate de potassium ou le chlorate de lithium. Le chlorate de métal alcalin peut être mis en œuvre seul ou accompagné du chlorure de métal alcalin correspondant dans des solutions aqueuses telles que celles obtenues pour la préparation de chlorates métaux alcalins à partir des chlorures de métaux alcalins correspondants par électrolyse.

Dans le procédé, objet de la présente invention, les deux réactifs, chlorate de métal alcalin, accompagné ou non du chlorure correspondant, en solution aqueuse et l'acide chlorhydrique sont introduits en continu dans un appareillage de génération du dioxyde de chlore. L'ensemble des deux réactifs est maintenu à une température au moins égale à 35°C et au plus égale à 70°C et de préférence de 50 à 65°C. Simultanément, un gaz inerte est introduit dans le mélange réactionnel

de façon à maintenir le dioxyde de chlore formé à des concentrations inférieures à 17% en volume dans le mélange gazeux qui se dégage. Ceci permet d'éviter toute décomposition du dioxyde de chlore. Le gaz inerte utilisé peut être de l'air, de l'azote ou tout autre gaz n'ayant pas d'affinité pour les réactifs ou les produits formés.

Dans le cadre de la présente invention et dans la gamme de température à laquelle est maintenu l'ensemble des réactifs, il est possible d'utiliser pour la construction de l'appareillage de génération du dioxyde de chlore d'autres matériaux beaucoup moins onéreux que le titane.

Parmi les matériaux utilisables pour la construction de l'appareillage de génération de dioxyde de chlore selon la présente invention figure à titre d'exemple non limitatif, le chlorure de polyvinyle. Ce matériau est facile à mettre en œuvre et peu onéreux.

Dans le procédé selon la présente invention les réactifs, chlorate de métal alcalin accompagné ou non du chlorure correspondant et l'acide chlorhydrique sont introduits dans des proportions telles que le rapport molaire du chlorate de métal alcalin et de l'acide chlorhydrique soit compris entre 0,5 et 3 et de préférence de 0,8 à 2. L'acidité initiale du mélange introduit dans le générateur est comprise entre 0,5 et 8 M et de préférence entre 1 et 4 M. L'appareillage de génération du dioxyde de chlore est constitué par un système composé d'un réacteur alimenté en continu et deux ou trois réacteurs fonctionnant par séquence. Le premier réacteur, appelé aussi réacteur principal, est alimenté en continu à l'aide des deux réactifs, la solution aqueuse de chlorate de métal alcalin et l'acide chlorhydrique. Dans ce réacteur, le temps de séjour des réactifs est compris entre 2 et 10 minutes et de préférence entre 2,5 et 7 minutes.

Le mélange réactionnel est maintenu à une température constante.

Les produits en solution aqueuse sortant de ce premier réacteur sont envoyés dans un système de réacteurs secondaires remplis et vidangés par séquence qui reçoivent alternativement lesdits produits. La température du mélange réactionnel dans ces réacteurs tout au long de la période de remplissage et de poursuite de la réaction est maintenue constante et égale ou au plus supérieure de 10 à 15°C à celle du premier réacteur continu. Le mélange reste 20 à 40 minutes dans chaque réacteur secondaire. Un système de deux ou trois réacteurs recevant alternativement la solution aqueuse provenant du premier réacteur peut être mis en œuvre pour recueillir celle-ci. L'ensemble constitué par le premier réacteur continu et l'un des réacteurs fonctionnant en séquence est balayé par un courant de gaz inerte destiné à diluer le dioxyde de chlore qui se forme de façon à éviter toute décomposition de celui-ci.

Les exemples suivants illustrent le présente invention.

Exemple 1

Une solution aqueuse contenant 592,8/ g/l de chlorate de sodium et 74,3 g/l de chlorure de sodium est envoyé en continu à raison de 46 l/h dans un réacteur ayant un volume de 10 litres. Simultanément de l'acide chlorhydrique à 405 g/l en solution aqueuse est envoyé dans ce même réacteur à raison de 18 l/h. Ceci correspond à un rapport molaire $NaClO_3$ /HCl égal à 1,28. Le volume de liquide dans ce réacteur au débordement était de 5,4 litres. En même temps par la base de ce réacteur un courant d'air était envoyé pour diluer le dioxyde de chlore. Le débit d'air était de 15 $m^3$/h et la température du mélange réactionnel a été maintenue à 60°C. Le temps de séjour des réactifs dans ce premier réacteur était de 5 minutes. La solution aqueuse sortant de ce premier réacteur a été envoyée successivement dans l'un des trois réacteurs, fonctionnant en séquence, pendant 20 minutes. Chacun de ces trois réacteurs avait un volume de 50 litres. Leur température a été maintenue à 60°C et ils ont été balayés à l'air à raison de 12 $m^3$/h lorsqu'ils renfermaient du mélange réactionnel.

Les réacteurs étaient construits en chlorure de polyvinyle.

Au bout d'une heure de fonctionnement il a été récupéré 4,73 kg de dioxyde de chlore et 4,33 kg de chlore. Ceci correspond à un rapport molaire $ClO_2/Cl_2$ égal à 1,15.

Exemple 2

Dans un système constitué de la même façon que dans l'exemple 1 avec trois réacteurs ayant chacun un volume de 70 l, une solution aqueuse contenant 599 g/l de chlorate de sodium et 107,8 g/l de chlorure de sodium est envoyé en continu dans le premier réacteur à raison de 79,9 l/h. De même de l'acide chlorhydrique à 407 g/l d'HCl à raison de 45,9 l/h est envoyé dans ce même réacteur dont la température est maintenue à 60°C. Le temps de séjour de réactifs dans ce premier réacteur était de 2,7 minutes. De la même façon, la solution sortant de ce premier réacteur continu est envoyée séquentiellement dans l'un des trois réacteurs pendant 30 minutes. La température de ces trois réacteurs a été fixée à 65°C. Le réacteur continu et les trois réacteurs fonctionnant en séquence ont été balayés à l'air comme cela a été indiqué dans l'exemple 1.

Au bout de 90 minutes de fonctionnement il a été récupéré 18,3 kg de dioxyde de chlore et 17,2 kg de chlore. Ceci correspond à un rapport molaire $ClO_2/Cl_2$ égal à 1,12.

**Revendication**

Procédé de génération de dioxyde de chlore à partir d'un chlorate de métal alcalin en solution aqueuse et d'acide chlorhydrique, dans lequel la température est comprise entre 35 et 70°C et un gaz inerte est introduit dans le mélange réactionnel de façon à maintenir la concentration en volume du dioxyde de chlore formé dans le mélange gazeux qui se dégage à une valeur inférieure à 17%, ledit procédé de génération de dioxyde de chlore étant caractérisé en ce que ledit chlorate

de métal alcalin et l'acide chlorhydrique sont introduits dans un premier réacteur dit réacteur principal dans des proportions telles que le rapport molaire du chlorate de métal alcalin et de l'acide chlorhydrique soit compris entre 0,5 et 3, l'acidité initiale du mélange introduit étant comprise entre 0,5 et 8 M et en ce que, après avoir séjourné pendant 2 à 10 minutes dans le réacteur principal les produits sont envoyés dans un système de réacteurs secondaires remplis et vindangés par séquence qui reçoivent alternativement lesdits produits, la température du mélange réactionnel dans chacun des réacteurs secondaires étant égale ou au plus supérieure de 15°C à celle du réacteur principal, et le temps de séjour dans chaque réacteur secondaire étant de 20 à 40 minutes.

**Claim**

Process for generating chlorine dioxide from an alkali metal chlorate in aqueous solution and from hydrochloric acid in which the temperature is between 35 and 70°C and an inert gas is introduced into the reaction mixture so as to maintain the concentration by volume of the chlorine dioxide formed in the gaseous mixture evolved at a value of less than 17%, the said process for generating chlorine dioxide being characterised in that the said alkali metal chlorate and hydrochloric acid are introduced into a first reactor, the so-called main reactor, in such proportions that the molar ratio of the alkali metal chlorate to the hydrochloric acid is between 0.5 and 3, the intitial acidity of the mixture introduced being between 0.5 and 8 M, and in that, after having remained in the main reactor for 2 to 10 minutes, the products are passed into a system of secondary reactors which are filled and emptied successively and which receive the said products alternatively, the temperature of the reaction mixture in each of the secondary reactors being equal to or at most 15°C above the temperature of the main reactor, and the residence time in each secondary reactor being from 20 to 40 minutes.

**Patentanspruch**

Verfahren zur Entwicklung von Chlordioxid aus einem Alkalichlorat in wässriger Lösung und Salzsäure, bei dem die Temperatur zwischen 30 und 70°C gehalten und ein Inertgas in das Reaktionsgemisch eingeleitet wird, um die Konzentration des gebildeten Chlordioxids in dem entstehenden Gasgemisch auf einem Wert unter 17 Vol.-% zu halten, dadurch gekennzeichnet, dass das Alkalichlorat und die Salzsäure in einen ersten, Hauptreaktor genannten Reaktor in einem solchen Verhältnis eingeführt werden, dass das Molverhältnis von Alkalichlorat zu Salzsäure 0,5 bis 3 beträgt, die Anfangs-Acididät des zugeführten Gemisches zwischen 0,5 und 8 M liegt und dass die Produkte nach einer Verweilzeit von 2 bis 10 Minuten in dem Hauptreaktor in ein System von nacheinander gefüllten und entleerten Sekundärreaktoren überführt werden, die umschichtig die genannten Produkte erhalten, wobei die Temperatur des Reaktionsgemisches in jedem der Sekundärreaktoren gleich oder höchstens 15°C höher als die des Hauptreaktors ist und die Verweilzeit in jedem Sekundärreaktor 20 bis 40 Minuten beträgt.